# EUROPEAN PATENT APPLICATION

(11) **EP 4 304 103 A1**
(43) Date of publication of application: **10.01.2024**
(21) Application number: 23183102.5
(22) Date of filing: 03.07.2023
(51) Int. Cl.: H04B 7/04, H04W 88/06, H04W 84/12, H04W 88/10

(54) **MULTI-LINK DEVICE CAPABLE OF ACTIVELY CHANGING LINK MODE**

(30) Priority: 05.07.2022 US 202263367657 P; 29.06.2023 US 202318216589
(71) Applicant: MediaTek Inc., Hsin-Chu 300 (TW)
(72) Inventor: CHANG, Li-Tien, 30078 Hsinchu City (TW); CHANG, Cheng-Yi, 30078 Hsinchu City (TW); LIN, Chun-Ting, 30078 Hsinchu City (TW)
(74) Representative: Hoefer & Partner Patentanwälte mbB

(57) **Abstract**

The present invention provides a wireless communication method of a multi-link device (120). The wireless communication method includes the steps of: establishing multiple links with an access point (110), wherein the multiple links have a current link mode; determining performance of a current link mode and at least one candidate link mode, wherein frequency band(s) corresponding to the current link mode and the at least one candidate link mode are not the same; and if the performance of one of the at least one candidate link mode is greater than the performance of the current link mode, switching the link mode of the multiple links, without reconnecting to the access point, so that the one of the at least one candidate link mode serves as the current link mode to communicate with the access point (110).

## Description

### Field of the Invention

The present invention relates to a multi-link device.

### Background of the Invention

When establishing a link with an access point, a band having best performance is generally selected for the wireless communication. However, since the station will move to another location due to the user, when the distance between the station and the access point changes, the station may suffer disconnection or re-association, or the station may suffer low throughput. In addition, if the station moves to a congestion environment that the other device occupies an airtime, the station will suffer throughput degradation.

### Summary of the Invention

It is therefore an objective of the present invention to provide a wireless communication method, which can actively change the link mode of the station to have better performance without reconnecting the access point, to solve the above-mentioned problems.

This is achieved by a wireless communication method according to claim 1, and a circuitry according to claim 10. The dependent claims pertain to corresponding further developments and improvements.

As will be seen more clearly from the detailed description following below, a wireless communication method of a multi-link device is disclosed. The wireless communication method comprises the steps of: establishing multiple links with an access point, wherein the multiple links have a current link mode; determining performance of a current link mode and at least one candidate link mode, wherein frequency band(s) corresponding to the current link mode and the at least one candidate link mode are not the same; and if the performance of one of the at least one candidate link mode is greater than the performance of the current link mode, switching the link mode of the multiple links, without reconnecting to the access point, so that the one of the at least one candidate link mode serves as the current link mode to communicate with the access point.

As will be seen more clearly from the detailed description following below, a circuitry of a station is configured to perform the steps of: establishing multiple links with an access point, wherein the multiple links have a current link mode; determining performance of a current link mode and at least one candidate link mode, wherein frequency band(s) corresponding to the current link mode and the at least one candidate link mode are not the same; and if the performance of one of the at least one candidate link mode is greater than the performance of the current link mode, switching the link mode of the multiple links, without reconnecting to the access point, so that the one of the at least one candidate link mode serves as the current link mode to communicate with the access point.

### Brief Description of the Drawings

FIG. 1 is a diagram illustrating a wireless communication system according to one embodiment of the present invention.
FIG. 2 is a flowchart of a wireless communication method of the STA MLD according to one embodiment of the present invention.
FIG. 3 is a timing diagram of a wireless communication between the AP MLD and the STA MLD according to one embodiment of the present invention.
FIG. 4 is a timing diagram of a wireless communication between the AP MLD and the STA MLD according to one embodiment of the present invention.
FIG. 5 is a timing diagram of a wireless communication between the AP MLD and the STA MLD according to one embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

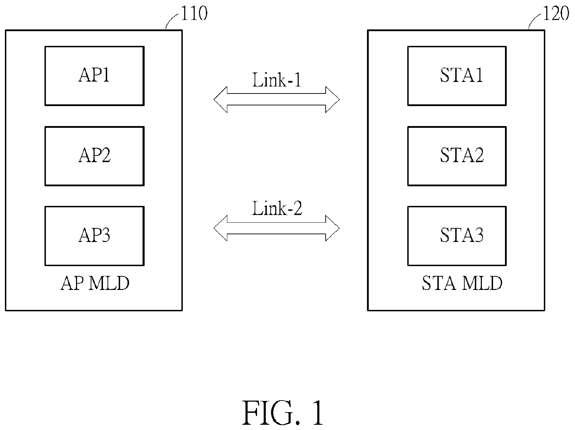

FIG. 1 is a diagram illustrating a wireless communication system according to one embodiment of the present invention. As shown in FIG. 1, the wireless communication system comprises an access point (AP) multi-link device (MLD) 110 and a station multi-link device (STA MLD) 120, wherein the AP MLD 110 comprises a plurality of access points such as AP1, AP2 and AP3, and the access points AP1, AP2 and AP3 are implemented by a processor and a wireless communication circuit; and the STA MI,D 120 comprises a plurality of stations such as STA1, STA2 and STA3, and the stations STA1, STA2 and STA3 are implemented by a processor and a wireless communication circuit. In this embodiment, the STA MLD 120 may be a cell phone, a tablet, a notebook, or any other electronic device capable of wirelessly communicating with the AP MLD 110, and the AP MLD 110 supports multiple link operations that can communicate with other devices by using two or more links.

In this embodiment, the wireless communication circuit of the AP MLD 110 or the wireless communication circuit of the STAMLD 120 may have two or more media access control (MAC) layer circuits and physical layer circuits for establishing the two or more links. FIG. 1 shows two links Link-1 and Link-2 for the following description, but the number of links shown in FIG. 1 is not a limitation of the present invention. In this embodiment, the Link-1 may use a channel corresponding to a 2.4GHz band (e.g., 2.412GHz - 2.484GHz), a 5GHz band (e.g., 4.915GHz - 5.825GHz) or a 6GHz band (e.g., 5.925GHz - 7.125GHz); and the Link-2 may also use a channel corresponding to the 2.4GHz band, the 5GHz band or the 6GHz band. For example, if a station is near the access point, a 5GHz band (e.g., 4.915GHz - 5.825GHz) or a 6GHz band (e.g., 5.925GHz - 7.125GHz) may be used for establishing the link; and if the distance between the station and the access point is relatively long, a 2.4GHz band (e.g., 2.412GHz - 2.484GHz) may be used for establishing the link.

In FIG. 1, AP1 and STA1 represent modules corresponding to the 2.4GHz band, AP2 and STA2 represent modules corresponding to the 5GHz band, and AP3 and STA3 represent modules corresponding to the 6GHz band. In this embodiment, the STA MLD 120 has two antennas, and 2*2 multi-in-multi-out (MIMO) beamforming technology can be used to communicate with the AP MLD 110, that is, only two of the STA1, STA2 and STA3 are used for the wireless communication with the AP MLD 110.

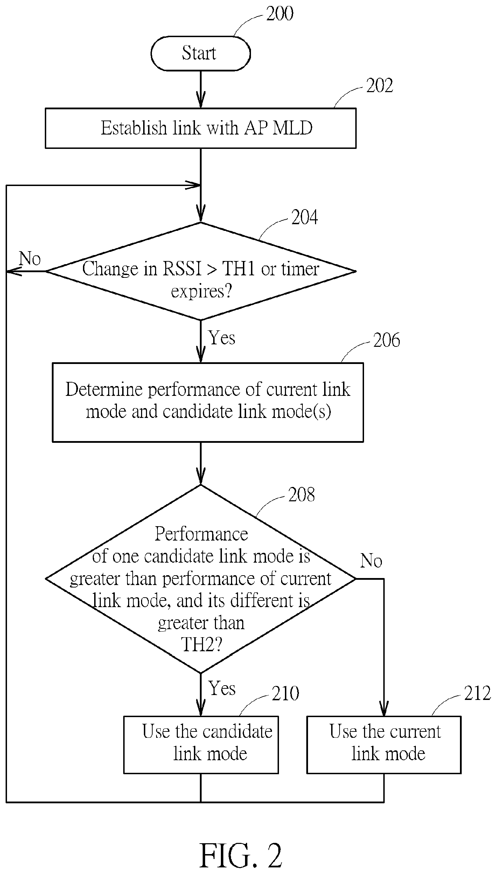

FIG. 2 is a flowchart of a wireless communication method of the STA MLD 120 according to one embodiment of the present invention. In Step 200, the flow starts, and the STA MLD 120 has been powered on. In Step 202, the STA MLD 120 establishes two or more links with the AP MLD 110, wherein the STA MLD 120 may detect received signal strength indication (RSSI) of signals corresponding to each frequency band to determine a link mode of the links. For example, if the 5GHz band and/or 6GHz band have better RSSI due to small distance between the AP MLD 110 and the STA MLD 120, the STA MLD 120 may determine 2*2 MIMO with 6GHz band, 5GHz+6GHz enhanced multi-link single radio (eMLSR), or 2*2 MIMO with 5GHz band; and if the 2.4GHz band has better RSSI due to large distance between the AP MLD 110 and the STA MLD 120, the STA MLD 120 may determine 2*2 MIMO with 2.4GHz band, 2.4GHz+5GHz eMLSR or 2.4GHz+5GHz asynchronous mode, wherein the asynchronous mode is also named as a STR (simultaneous transmit and receive) mode, that is the STA MLD 120 can transmit and receive data at the same time via multiple links.

The wireless communication circuit within the STA MLD 120 may continuously or periodically detect the RSSI of each frequency band, and in Step 204, the wireless communication circuit determines if a change in RSSI of any one of the frequency bands is greater than a first threshold or if a periodical timer expires, if yes, the flow enters Step 206; and if not, the flow stays in Step 204.

In Step 206, the processor or the wireless communication circuit within the STA MLD 120 determines performance of a current link mode and at least one candidate link mode. For example, if the current link mode is 2*2 MIMO with 2.4GHz band, the candidate link mode may be 2*2 MIMO with 5GHz bandor 2.4GHz+5GHz STR/eMLSR; if the current link mode is 2.4GHz+5GHz STR/eMLSR, the candidate link mode may be 2*2 MIMO with 5GHz band or 2*2 MIMO with 2.4GHz band; if the current link mode is 2*2 MIMO with 5GHz band, the candidate link mode may be 2*2 MIMO with 2.4GHz band, 2*2 MIMO with 6GHz band, 2.4GHz+5GHz STR/eMLSR or 5GHz+6GHz eMLSR; if the current link mode is 5GHz+6GHz eMLSR, the candidate link mode may be 2*2 MIMO with 5GHz band or 2*2 MIMO with 6GHz band; and if the current link mode is 2*2 MIMO with 6GHz band, the candidate link mode may be 2*2 MIMO with 5GHz band or 5GHz+6GHz eMLSR. In addition, the performance of the current link mode or the candidate link mode may be determined according to a throughput of the STA MLD 120 and an available time percentage, wherein the throughput of the STA MLD 120 may be estimated by using a bandwidth of the link mode, a rate index carried in an EHT-SIG (extremely high throughput signal) field of the received packet and/or a number of spatial stream (NSS); and the available time percentage may be (1/OBSS_num), wherein the parameter "OBSS_num" is a number of overlapping basic service set (OBSS) corresponding to the STA MLD 120; or the available time percentage may be ((1-BT_time)/OBSS_num) if the link mode comprises 2.4GHz band, wherein the parameter "BT_time" is a percentage used to transmit Bluetooth packets in airtime. In one embodiment, the performance of the current link mode or the candidate link mode may be calculated by multiplying the throughput of the STA MLD 120 by the available time percentage.

In one embodiment, non-Wi-Fi packet will also affect the channel access probability. Thus, EDCCA (energy detect clear channel assessment) counters including primary and secondary channels are also used to determine the performance of the current link mode or the candidate link mode. If the current link mode is with high interference loading, hybrid multi-link operation (MLO) algorithm will change the current link mode to a better link mode with less interference loading, wherein the changed link mode may be MIMO, eMLSR or STR.

The AP MLD 110 may periodically transmit a beacon frame defined in IEEE 802.11 to the other devices in an infrastructure basic service set (BSS), wherein the beacon frame comprises information of the network. In this embodiment, the beacon frame transmitted via one link comprises information of all the links of the AP MLD 110. For example, the beacon frame transmitted by the AP MLD 110 via one link may comprise profile of the links corresponding to 2.4GHz band, 5GHz band and 6GHz band. Therefore, because the STA MLD 120 comprises profiles of the links corresponding to all the frequency bands, the processor or the wireless communication circuit within the STA MLD 120 can switch to the candidate link mode in Step 206 to calculate the performance without reconnection/re-association.

In Step 208, the processor or the wireless communication circuit within the STA MLD 120 determines if the performance of any one of the candidate link mode is greater than the performance of the current link mode, and its difference is greater than a second threshold, if yes, the flow enters Step 210; and if not, the flow enters Step 212.

In Step 210, the processor or the wireless communication circuit within the STA MLD 120 uses the candidate link mode in Step 208 to serve as the current link mode, and uses the new current link mode to communicate with the AP MLD 110. Then, the flow goes back to Step 204.

In Step 212, the processor or the wireless communication circuit within the STA MLD 120 uses the current link mode to communicate with the AP MLD 110. Then, the flow goes back to Step 204.

In the above embodiments, by actively changing the link mode of the STA MLD 120 to have better performance, the possibility of disconnection between STA MLD 120 and AP MLD 110 can be avoided, thereby improving the connection quality and user experience. Specifically, if the current link mode of the STA MLD 120 is 2*2 MIMO with 6GHz and the user takes the STA MLD 120 away from the AP MLD 110, the STA MLD 120 may actively switch the link mode to 2*2 MIMO with 5GHz and 2*2 MIMO with 2.4GHz in sequence while the STA MLD 120 is moving, so it can avoid the disconnection caused by the STA MLD 120 being far away from the AP MLD 110. For another example, if the current link mode of the STA MLD 120 is 2*2 MIMO with 2.4GHz and the user approaches the AP MLD 110 with the STA MLD 120, the STA MLD 120 may actively switch the link mode to 2*2 MIMO with 5GHz and 2*2 MIMO with 6GHz in sequence while the STA MLD 120 is moving, so the throughput of the STA MLD 120 can be improved without reconnecting the AP MLD 110.

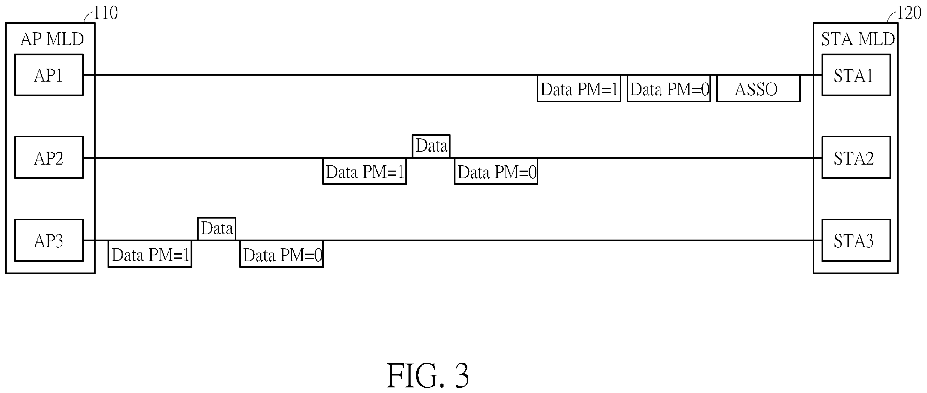

FIG. 3 is a timing diagram of a wireless communication between the AP MLD 110 and the STA MLD 120 according to one embodiment of the present invention. In FIG. 3, it is assumed that AP1 and STA1 represent modules corresponding to the 2.4GHz band, AP2 and STA2 represent modules corresponding to the 5GHz band, and AP3 and STA3 represent modules corresponding to the 6GHz band. In addition, the STA MLD 120 has two antennas, and 2*2 multi-in-multi-out (MIMO) beamforming technology is used to communicate with the AP MLD 110. In the wireless communication between the AP MLD 110 and the STA MLD 120, initially the STA MLD 120 associates with the AP MLD 110 and uses a 2*2 MIMO with 2.4GHz to establish a link, and the STA MLD 120 starts to transmit data with a power management bit equal to "0" (i.e., PM=0) to the AP MLD 110; and when the data transmission is complete, the power management bit "1" is sent to the AP MLD 110 to notify that the STA MLD 120 enters a power saving mode. Then, if the user approaches the AP MLD 110 with the STA MLD 120, the processor or the wireless communication circuit within the STA MLD 120 switches the link mode to 2*2 MIMO with 5GHz, and the STA MLD 120 starts to transmit data with a power management bit "0" to the AP MLD 110 so that the AP MLD 110 can transmit data to the STA MLD 120; and then when the data transmission is complete, the power management bit "1" is sent to the AP MLD 110. Then, as the user get closer to the AP MLD 110 with the STA MLD 120, the processor or the wireless communication circuit within the STA MLD 120 switches the link mode to 2*2 MIMO with 6GHz, and the STA MLD 120 starts to transmit data with a power management bit "0" to the AP MLD 110 so that the AP MLD 110 can transmit data to the STA MLD 120; and then when the data transmission is complete, the power management bit "1" is sent to the AP MLD 110.

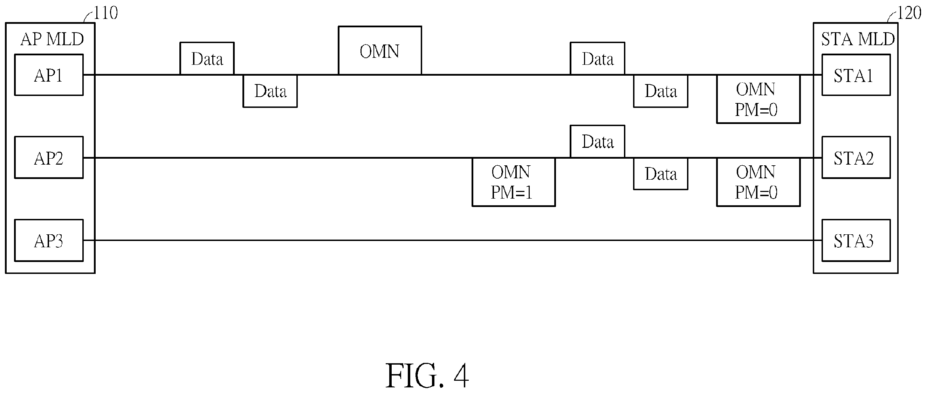

FIG. 4 is a timing diagram of a wireless communication between the AP MLD 110 and the STA MLD 120 according to one embodiment of the present invention. In FIG. 3, initially the STA MLD 120 associates with the AP MLD 110 and uses 2.4GHz+5GHz STR mode to establish a link having Link-1 and Link-2 shown in FIG .1, wherein Link-1 uses one antenna and a channel of the 2.4GHz band, and Link-2 uses one antenna and a channel of the 5GHz band. The STA MLD 120 transmits the operating mode notification (OMN) with the power management bit "0" to the AP MLD 110, and the STA MLD 120 and the AP MLD 110 communicate with each other. Then, if the performance of the candidate link mode is greater than the current link mode, the STA MLD 120 will switch to the other link mode, and the STA MLD 120 may use 2*2 MIMO with 5GHz or 2*2 MIMO with 2.4GHz to communicate with the AP MLD 110.

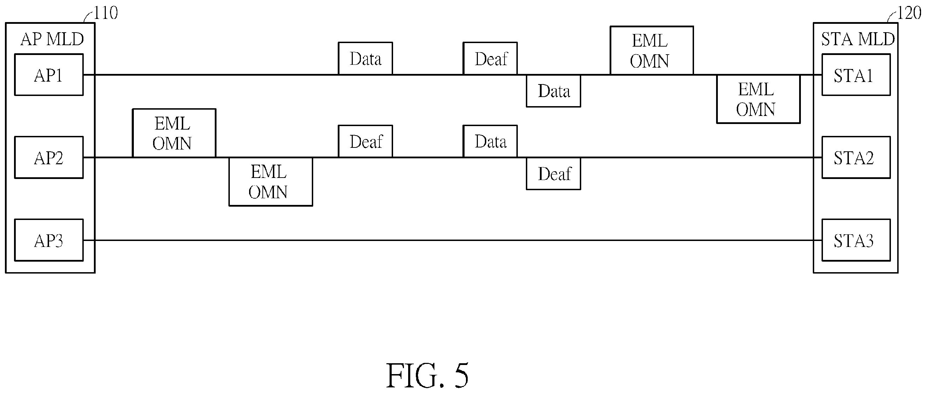

FIG. 5 is a timing diagram of a wireless communication between the AP MLD 110 and the STA MLD 120 according to one embodiment of the present invention. In FIG. 3, initially the STA MLD 120 associates with the AP MLD 110 with three links and determine 2.4GHz which means other links are in doze mode. The STA MLD 120 transmits the enhanced multi-link operating mode notification (EML OMN) to the AP MLD 110, and the STA MLD 120 and the AP MLD 110 communicate with each other. In this embodiment, the STA MLD supports enhanced multilink single-radio (eMLSR) operation on 2.4G Hz and 5G Hz so that the data is transmitted by using two antennas (i.e., NSS=2). Then, if the performance of the candidate link mode is greater than the current link mode, the STA MLD 120 will stand on 2.4G Hz and 5G Hz eMLSR or the STA MLD 120 may use 2*2 MIMO with 5GHz to communicate with the AP MLD 110, and transmits the EML OMN to disable the eMLSR operation. If the STA MLD 120 uses 2*2 MIMO with 5GHz and STA MLD 120 close to AP MLD 110, The STA MLD 120 transmits the enhanced multi-link operating mode notification (EML OMN) to the AP MLD 110, and the STA MLD 120 and the AP MLD 110 communicate with each other. In this embodiment, the STA MLD 120 supports eMLSR operation on 5G Hz and 6G Hz so that the data is transmitted by using two antennas (i.e., NSS=2). Then, if the performance of the candidate link mode is greater than the current link mode, the STA MLD 120 will stand on 5G Hz and 6G Hz eMLSR or the STA MLD 120 may use 2*2 MIMO with 6GHz to communicate with the AP MLD 110, and transmits the EML OMN to disable the eMLSR operation.

Briefly summarized, in the wireless communication method of the present invention, by actively changing the link mode of the STA MLD 120 to have better performance, the possibility of disconnection between STA MLD 120 and AP MLD 110 can be avoided, thereby improving the connection quality and user experience.

## Claims

1. A wireless communication method of a multi-link device (120), and the wireless communication method comprises:
establishing multiple links with an access point (110), wherein the multiple links have a current link mode;
determining performance of the current link mode and at least one candidate link mode, wherein frequency band(s) corresponding to the current link mode and the at least one candidate link mode are not the same; and
if the performance of one of the at least one candidate link mode is greater than the performance of the current link mode, switching the link mode of the multiple links, without reconnecting to the access point, so that the one of the at least one candidate link mode serves as the current link mode to communicate with the access point (110).

2. The wireless communication method of claim 1, wherein the performance of the current link mode and the performance of the at least one candidate link mode is calculated according a throughput of a station and an available time percentage.

3. The wireless communication method of claim 2, wherein the available time percentage is calculated according to a number of overlapping basic service set (OBSS) corresponding to the station.

4. The wireless communication method of claim 3, wherein the available time percentage is calculated according to the number of OBSS corresponding to the station and a percentage used to transmit Bluetooth packets in airtime.

5. The wireless communication method of claim 1, 2, 3 or 4, wherein the current link mode is 2*2 multi-in-multi-out (MIMO) with 2.4GHz band, the at least one candidate link mode comprises 2*2 MIMO with 5GHz band, or a simultaneous transmit and receive (STR)/enhanced multi-link single radio (eMLSR) mode with 2.4GHz band and 5GHz band.

6. The wireless communication method of claim 1, 2, 3 or 4, wherein the current link mode is a STR/eMLSR mode with 2.4GHz band and 5GHz band, and the at least one candidate link mode comprises 2*2 MIMO with 2.4GHz band or 2*2 MIMO with 5GHz band.

7. The wireless communication method of claim 1, 2, 3 or 4, wherein the current link mode is 2*2 MIMO with 5GHz band, and the at least one candidate link mode comprises 2*2 MIMO with 2.4GHz band, 2*2 MIMO with 6GHz band, a STR/eMLSR mode with 2.4GHz band and 5GHz band, or an eMLSR mode with 5GHz band and 6GHz band.

8. The wireless communication method of claim 1, 2, 3 or 4, wherein the current link mode is an eMLSR mode with 2.4GHz band and 5GHz band, and the at least one candidate link mode comprises 2*2 MIMO with 5GHz band or 2*2 MIMO with 6GHz band.

9. The wireless communication method of claim 1, 2, 3 or 4, wherein the current link mode is 2*2 MIMO with 6GHz band, and the at least one candidate link mode comprises 2*2 MIMO with 5GHz band, or an eMLSR mode with 5GHz band and 6GHz band.

10. A circuitry, configured to perform the steps of:
establishing multiple links with an access point (110), wherein the multiple links have a current link mode;
determining performance of the current link mode and at least one candidate link mode, wherein frequency band(s) corresponding to the current link mode and the at least one candidate link mode are not the same; and
if the performance of one of the at least one candidate link mode is greater than the performance of the current link mode, switching the link mode of the multiple links, without reconnecting to the access point, so that the one of the at least one candidate link mode serves as the current link mode to communicate with the access point.

11. The circuitry of claim 10, wherein the performance of the current link mode and the performance of the at least one candidate link mode is calculated according a throughput of a station and an available time percentage.

12. The circuitry of claim 11, wherein the available time percentage is calculated according to a number of overlapping basic service set (OBSS) corresponding to the station.

13. The circuitry of claim 12, wherein the available time percentage is calculated according to the number of OBSS corresponding to the station and a percentage used to transmit Bluetooth packets in airtime.

14. The circuitry of claim 10, 11, 12 or 13, wherein the current link mode is 2*2 multi-in-multi-out (MIMO) with 2.4GHz band, the at least one candidate link mode comprises 2*2 MIMO with 5GHz band, or a simultaneous transmit and receive (STR)/enhanced multi-link single radio (eMLSR) mode with 2.4GHz band and 5GHz band.

15. The circuitry of claim 10, 11, 12 or 13, wherein the current link mode is a STR/eMLSR mode with 2.4GHz band and 5GHz band, and the at least one candidate link mode comprises 2*2 MIMO with 2.4GHz band or 2*2 MIMO with 5GHz band.
